# EUROPÄISCHE PATENTSCHRIFT

(11) **EP 0 953 775 B1**
(45) Veröffentlichungstag und Bekanntmachung des Hinweises auf die Patenterteilung: **07.02.2001**
(21) Anmeldenummer: 99108190.2
(22) Anmeldetag: 27.04.1999
(51) Int. Cl.: F04D 29/62, F16B 41/00, F04D 29/60, F04D 13/06

(54) **Befestigung zwischen Pumpe und Motor**
Fastening of pump to motor
Fixation pompe à moteur

(30) Priorität: 02.05.1998 DE 19819723
(43) Veröffentlichungstag der Anmeldung: 03.11.1999
(73) Patentinhaber: WILO GmbH, D-44263 Dortmund (DE)
(72) Erfinder: Strelow, Günter, 44801 Bochum (DE)
(74) Vertreter: COHAUSZ HANNIG DAWIDOWICZ & PARTNER

(56) Entgegenhaltungen:
- EP-A- 0 218 031
- DE-U- 9 416 551
- DE-U- 29 704 753
- US-A- 3 209 806
- US-A- 5 290 132

## Beschreibung

Die Erfindung betrifft eine Motorkreiselpumpe mit einem am Pumpengehäuse auf einer Seite koaxial befestigten Motor, insbesondere Spaltrohrmotor, wobei das Motorgehäuse, insbesondere in einem Flansch Bohrungen aufweist, durch die Schrauben gesteckt sind, die in Bohrungen des Pumpengehäuses einliegen.

Aus dem deutschen Gebrauchsmuster 9416551 ist es bekannt, eine Motorkreiselpumpe an einem Verbraucher in der Weise zu befestigen, daß Schrauben durch den Flansch des Motorgehäuses und durch Bohrungen des Pumpengehäuses gesteckt werden, um dann in den Verbraucher eingeschraubt zu werden. Hierbei hat es sich gezeigt, daß in dem Zustand, in dem der Verbraucher an der Pumpe noch nicht angeschlossen ist, die Pumpe sich von dem Motor lösen kann.

Aufgabe der Erfindung ist es, eine Motorkreiselpumpe der eingangs genannten Art so zu verbessern, daß Herstellung und Montage sowie Transport der Pumpe erleichtert werden.

Diese Aufgabe wird erfindungsgemäß dadurch gelöst, daß an dem Pumpengehäuse Vorsprünge vorstehen, die in die Bohrungen des Motorgehäuses seitlich der Schraube hineinragen und dort einrastend gehalten sind.

Durch eine solche Konstruktion findet das Pumpengehäuse am Motorengehäuse auch dann ausreichend Halt, wenn die Motorpumpe noch nicht am Verbraucher bzw. an einer Anschlußvorrichtung befestigt ist. Hierbei sind Herstellung und Handhabung besonders einfach. Besonders vorteilhaft ist es hierbei, wenn die Vorsprünge federnde Rastzungen sind. Auch wird vorgeschlagen, daß das freie Ende des Vorsprungs/der Rastzunge mit einer Nase hinter einer Stufe der Motorengehäuse-Bohrung einrastet.

Von größtem Vorteil ist es, wenn für einen klemmenden Halt der Schrauben die federnden Zungen zwischen sich einen Abstand bilden, der kleiner ist als der Durchmesser des Schraubenschaftes. Hierdurch wird sicher verhindert, daß bei noch Nichtbefestigung an einem Verbraucher die Schrauben herausfallen können.

Vorzugsweise wird vorgeschlagen, daß zur Drehsicherung der Schraube mindestens ein Vorsprung einer Zunge in eine Ausnehmung der Schraube hineinragt. Damit wird sicher verhindert, daß die Schrauben sich lösen können, wenn die Pumpe am Verbraucher oder einer Anschlußvorrichtung befestigt ist.

Vorzugsweise wird vorgeschlagen, daß die über die Pumpenseitenwand hinausstehenden Bereiche der Schrauben in Gewindebohrungen der Verbrauchs- oder Anschlußvorrichtung einschraubbar sind. Hierbei kann die Schraube ihr Gewinde in der Bohrung selber schneiden bzw. eindrücken. Auch wird vorteilhafterweise vorgeschlagen, daß am Verbraucher/an der Anschlußvorrichtung mindestens ein Bereich, insbesondere zwei oder mehr Vorsprünge/Zungen vorstehen, der/die in eine Ausnehmung des Pumpengehäuses hineinragen und mit ihrer(n) Innenseite(n) eine Verlängerung der Bohrung des Verbrauchers/der Anschlußvorrichtung bildet/bilden. Damit wird sichergestellt, daß die Schraube auch dann einen ausreichenden Halt im Verbraucher oder der Anschlußvorrichtung findet, wenn die im Verbraucher bzw. in der Anschlußvorrichtung vorgesehene Bohrung nicht genügend tief ist.

Vorzugsweise wird vorgeschlagen, daß das Pumpengehäuse auf der dem Motor abgewandten Seite eine flache Seitenwand bildet, die rechtwinklig zur Pumpenachse liegt und an einer flachen Wand einer Verbrauchs- oder Anschlußvorrichtung direkt befestigbar ist. Auch wird vorgeschlagen, daß die Ein- oder Auslässe von der Pumpe und von der Verbrauchs- oder Anschlußvorrichtung miteinander fluchten.

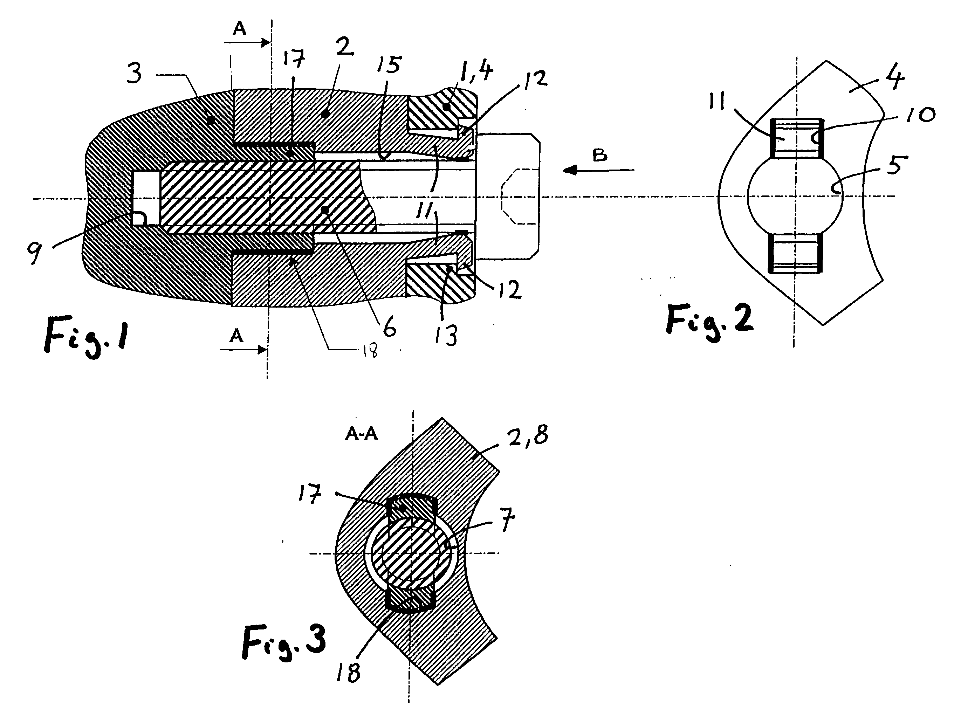

Ein Ausführungsbeispiel der Erfindung ist in der Zeichnung dargestellt und wird im folgenden näher beschrieben. Es zeigen
- Fig. 1: einen axialen Schnitt durch den Befestigungsbereich zwischen Motorpumpe und Anschlußvorrichtung bzw. Verbrauchsvorrichtung in einem Ausschnitt,
- Fig. 2: eine Ansicht nach Pfeil B in Fig. 1 und
- Fig. 3: einen Schnitt nach A-A in Fig. 1.

In der Zeichnung ist nur die Befestigungsstelle zwischen Motor 1, Pumpe 2 und Verbraucher (Verbrauchs- oder Anschlußvorrichtung) 3 in einem Ausschnitt dargestellt. Im Flansch 4 des Motorengehäuses ist eine Bohrung 5 eingebracht, durch die eine Schraube 6 derart gesteckt ist, daß der Schraubenschaft durch eine Öffnung 7 des Pumpengehäuses, insbesondere des Flansches 8 des Pumpengehäuses verläuft und darüber hinaus steht, um in eine Bohrung 9 des Verbrauchers 3 hineinzureichen. Im eingeschraubten Zustand sind durch insbesondere vier Schrauben das Motorengehäuse am Pumpengehäuse und die gesamte Motorkreiselpumpe am Verbraucher 3 befestigt.

In der Seitenwand der Bohrung 5 sind radiale Ausnehmungen 10 eingebracht, in denen federnde Rastzungen 11 liegen, die auf der dem Motor zugewandten Seite am Pumpengehäuse angeformt sind. Die freien Enden der Zungen 11 weisen jeweils eine Nase 12 auf, die hinter einem Vorsprung, insbesondere einer Stufe 13 in der Seitenwand der Bohrung 5, insbesondere in der radialen Ausnehmung einrasten. Hierdurch sind Pumpe 2 und Motor 1 aneinander auch dann gehalten, wenn die Schraube 6 nicht einliegt bzw. die Motorkreiselpumpe nicht am Verbraucher befestigt ist.

Im Ausführungsbeispiel sind die radialen Ausnehmungen 10 auf diametral gegenüberliegenden Seiten in der Bohrung 5 eingebracht, so daß auch nur zwei Zungen aufeinander diametral gegenüberliegenden Seiten an der Außenseite der Bohrung 15 des Pumpengehäuses, insbesondere des Flansches 8 des Pumpengehäuses angeformt sind. Es kann aber auch nur eine einzige Zunge 11 an jeder Bohrung 15 oder mehr als zwei Zungen angeordnet sein.

Die Zungen 11 ragen etwas nach innen zur Schraube 6 hin in den Bereich des Schraubenschaftes hinein, so daß die Schraube 6 von den Zungen 11 klemmend auch dann gehalten ist, wenn diese noch nicht in den Verbraucher 3 eingeschraubt ist. Ferner können die Zungen 11 in einer Ausnehmung der Seitenwand des Schraubenschaftes 6 einliegen, um eine Drehsicherung für die Schraube zu bilden.

Die Schraube 6 liegt mit dem freien Ende ihres Schaftes in der Bohrung 9 des Verbrauchers 3 ein, wobei die Bohrung 9 kein Gewinde besitzt, sondern die Schraube 6 sich das Gewinde selbst schneidet bzw. selbst drückt.

An der Außenseite des Verbrauchers 3, die der Pumpe 2 zugewandt ist, steht mindestens ein Bereich, insbesondere ein Vorsprung in Form von zwei oder mehr Zungen 17 vor, die in die Bohrung bzw. in seitliche Ausnehmungen 18 der Bohrung 15 hineinragen und damit die Bohrung 9 verlängern, so daß die Schraube 6 genügend Halt auch dann im Verbraucher 3 findet, wenn die Bohrung 9 verhältnismäßig kurz ausgeführt ist. Dieser Bereich bzw. dieser Vorsprung braucht nicht unbedingt in Form von Zungen 17, die diametral zueinander angeordnet sind, ausgeführt zu sein, sondern dieser Vorsprung bzw. diese Vorsprünge können auch rohrförmig, bzw. buchsenförmig oder Teilbereiche hiervon sein.

## Patentansprüche

1. Motorkreiselpumpe mit einem am Pumpengehäuse auf einer Seite koaxial befestigten Motor (1), insbesondere Spaltrohrmotor, wobei das Motorgehäuse, insbesondere in einem Flansch (4) Bohrungen (5) aufweist, durch die Schrauben (6) gesteckt sind, die in Bohrungen (15) des Pumpengehäuses einliegen, **dadurch gekennzeichnet**, daß an dem Pumpengehäuse Vorsprünge (11) vorstehen, die in die Bohrungen (5) des Motorgehäuses seitlich der Schraube (6) hineinragen und dort einrastend gehalten sind.

2. Pumpe nach Anspruch 1, **dadurch gekennzeichnet**, daß die Vorsprünge federnde Rastzungen sind.

3. Pumpe nach Anspruch 1 oder 2, **dadurch gekennzeichnet**, daß das freie Ende des Vorsprungs/der Rastzunge mit einer Nase (12) hinter einer Stufe (13) der Motorengehäuse-Bohrung (5) einrastet.

4. Pumpe nach einem der vorherigen Ansprüche, **dadurch gekennzeichnet**, daß für einen klemmenden Halt der Schrauben (6) die federnden Zungen (11) zwischen sich einen Abstand bilden, der kleiner ist als der Durchmesser des Schraubenschaftes.

5. Pumpe nach einem der vorherigen Ansprüche, **dadurch gekennzeichnet**, daß zur Drehsicherung der Schraube (6) mindestens ein Vorsprung einer Zunge (11) in eine Ausnehmung der Schraube (6) hineinragt.

6. Pumpe nach Anspruch 1, **dadurch gekennzeichnet**, daß die über die Pumpenseitenwand hinausstehenden Bereiche der Schrauben (6) in Gewindebohrungen (9) der Verbrauchs- oder Anschlußvorrichtung (3) einschraubbar sind.

7. Pumpe nach Anspruch 6, **dadurch gekennzeichnet**, daß die Schraube (6) ihr Gewinde in der Bohrung (9) selber schneidet bzw. eindrückt.

8. Pumpe nach Anspruch 6 oder 7, **dadurch gekennzeichnet**, daß am Verbraucher/an der Anschlußvorrichtung (3) mindestens ein Bereich, insbesondere zwei oder mehr Vorsprünge/Zungen (17) vorstehen, der/die in eine Ausnehmung (18) des Pumpengehäuses hineinragen und mit ihrer(n) Innenseite(n) eine Verlängerung der Bohrung (9) des Verbrauchers/der Anschlußvorrichtung (3) bildet/bilden.

9. Pumpe nach einem der vorherigen Ansprüche, **dadurch gekennzeichnet**, daß das Pumpengehäuse auf der dem Motor (1) abgewandten Seite eine flache Seitenwand bildet, die rechtwinklig zur Pumpenachse liegt und an einer flachen Wand einer Verbrauchs- oder Anschlußvorrichtung (3) direkt befestigbar ist.

10. Pumpe nach einem der vorherigen Ansprüche, **dadurch gekennzeichnet**, daß die Ein- oder Auslässe von der Pumpe und von der Verbrauchs- oder Anschlußvorrichtung (3) miteinander fluchten.

## Claims

1. A motor-driven centrifugal pump having a motor (1), more particularly a canned motor, attached coaxially to the pump casing on one side, the motor casing being formed, more particularly in a flange (4), with bores (5) through which screws (6) are inserted which are received in bores (15) of the pump casing, **characterised in that** projecting from the pump casing are projections (11) which extend laterally of the screw (6) into the bores (5) of the motor casing and are retained latched therein.

2. A pump according to claim 1, **characterised in that** the projections are resilient latching tongues.

3. A pump according to claims 1 or 2, **characterised in that** the free end of the projection/latching tongue latches via a lug (12) behind a step (13) of the motor casing bore (5).

4. A pump according to one of the preceding claims, **characterised in that** for a clamping retention of the screws (6), the resilient tongues (11) form between themselves a gap which is smaller than the diameter of the screw shank.

5. A pump according to one of the preceding claims, **characterised in that** to secure the screw (6) rotationally, at least one projection of a tongue (11) extends into a recess in the screw (6).

6. A pump according to claim 1, **characterised in that** the zones of the screws (6) projecting beyond the pump side wall can be screwed into threaded bores (9) in the load or connecting device (3).

7. A pump according to claim 6, **characterised in that** the screw (6) itself cuts or forces its thread in the bore (9).

8. A pump according to claims 6 or 7, **characterised in that** projecting from the load/connecting device (3) is at least one zone, more particularly two or more projections/tongues (17) which extend into a recess (18) in the pump casing and by their inner sides form a prolongation of the bore (9) of the load/connecting device (3).

9. A pump according to one of the preceding claims, **characterised in that** on the side remote from the motor (1) the pump casing forms a flat side wall which lies at right angles to the pump axis and can be directly attached to a flat wall of a load or connecting device (3).

10. A pump according to one of the preceding claims, **characterised in that** the inlets or outlets of the pump and the load or connecting device (3) are in alignment with one another.

## Revendications

1. Motopompe centrifuge avec un moteur (1), en particulier un moteur à gaine, fixé coaxialement au carter de pompe sur un côté, le carter de moteur présentant, en particulier dans une collerette (4), des alésages (5) à travers lesquels sont enfoncées des vis (6) qui sont logées dans des alésages (15) du carter de pompe,
caractérisée en ce que des saillies (11) dépassent du carter de pompe et pénètre dans les alésages (5) du carter de moteur latéralement par rapport à la vis (6) et y sont maintenues à encliquetage.

2. Pompe selon la revendication 1,
caractérisée en ce que les saillies sont des languettes d'arrêt élastiques.

3. Pompe selon la revendication 1 ou 2,
caractérisée en ce que l'extrémité libre de la saillie/de la languette d'arrêt s'encliquète par un nez (12) derrière un gradin (13) de l'alésage (5) du carter de moteur.

4. Pompe selon l'une des revendications précédentes,
caractérisée en ce que, pour un maintien serré des vis (6), les languettes (11) élastiques forment entre elles un écart qui est inférieur au diamètre de la tige de vis.

5. Pompe selon l'une des revendications précédentes,
caractérisée en ce que, pour l'arrêt en rotation de la vis (6), au moins une saillie d'une languette (11) fait saillie dans un évidemment de la vis (6).

6. Pompe selon la revendication 1,
caractérisée en ce que les zones des vis (6) saillant au-dessus de la paroi latérale de la pompe peuvent être vissées dans des alésages taraudés (9) du dispositif de consommation ou de raccordement (3).

7. Pompe selon la revendication 6,
caractérisée en ce que la vis (6) découpe ou respectivement empreint elle-même son filet dans l'alésage (9).

8. Pompe selon la revendication 6 ou 7,
caractérisée en ce que, au consommateur/au dispositif de raccordement (3) fait saillie au moins une zone, en particulier deux saillies/languettes (17) ou plus, qui font saillie dans un évidemment (18) du carter de pompe et forment par leur(s) côté(s) intérieur(s) un prolongement de l'alésage (9) du consommateur/du dispositif de raccordement (3).

9. Pompe selon l'une des revendications précédentes,
caractérisée en ce que le carter de pompe forme, sur le côté écarté du moteur (1), une paroi latérale plane qui se trouve à angle droit par rapport à l'axe de pompe et peut être fixée directement à une paroi plane d'un dispositif de consommation ou de raccordement (3).

10. Pompe selon l'une des revendications précédentes,
caractérisée en ce que les entrées ou sorties de la pompe et du dispositif de consommation ou de raccordement (3) sont alignées les unes avec les autres.
